# EUROPEAN PATENT SPECIFICATION

(11) **EP 4 187 303 B1**
(45) Date of publication and mention of the grant of the patent: **15.10.2025**
(21) Application number: 22208382.6
(22) Date of filing: 18.11.2022
(51) Int. Cl.: G02B 7/00, G02B 21/08, G02B 19/00, G02B 27/32, G01J 3/10, G01J 3/02

(54) **MICROSCOPE WITH PRE-ALIGNED CONDITIONING OPTICS**
MIKROSKOP MIT VORAUSGERICHTETER KONDITIONIEROPTIK
MICROSCOPE AVEC OPTIQUE DE CONDITIONNEMENT PRÉ-ALIGNÉE

(30) Priority: 30.11.2021 US 202163284235 P
(43) Date of publication of application: 31.05.2023
(73) Proprietor: Thermo Electron Scientific Instruments LLC, Madison WI 53711 (US)
(72) Inventor: YAN, Min, Verona (US); CLEARY, Joseph A., Blanchardville (US); KEEFE, William Robert, Oconomowoc (US)
(74) Representative: Boult Wade Tennant LLP

(56) References cited:
- EP-A1- 1 686 407
- US-A1- 2006 087 728
- US-A1- 2008 049 304
- US-B1- 6 515 750

## Description

### TECHNICAL FIELD

This disclosure relates generally to a microscope, more particularly, to a microscope system and method with pre-aligned conditioning optics to accommodate multiple optical input sources.

### BACKGROUND

A spectrometer (sometimes referred to as a spectroscope) is an instrument wherein a solid, liquid, or gaseous specimen is illuminated, often with non-visible light, such as light in the infrared region of the spectrum. The light from the specimen is then captured and analyzed to reveal information about the characteristics of the specimen. For example, a specimen may be illuminated with infrared light having known intensity across a range of wavelengths, and the light transmitted and/or reflected by the specimen can then be captured for comparison to the illuminating light. Review of the captured spectra (e.g., light intensity vs. wavelength data) can then illustrate the wavelengths at which the illuminating light was absorbed by the specimen, which in turn can yield information about the chemical bonds present in the specimen, and thus its composition and other characteristics. To illustrate, libraries of spectra obtained from reference specimens of known composition are available, and by matching measured spectra versus these reference spectra, one can then determine the composition of the specimens from which the measured spectra were obtained.

Spectroscopic microscopes include a spectrometer and an optical microscope that incorporate the ability to make spectroscopic measurements into the optical microscope. A user may therefore use a spectroscopic microscope to view an image of a region of interest on a specimen (usually in magnified form), and also to obtain spectroscopic data from one or more locations on the region of interest. The spectrometer can provide infrared and/visible light beam to the microscope so that the user can view an image of a region of interest. The user can also review the spectra (and thus the composition) of the specimen over the region of interest. An example of the spectroscopic microscope is disclosed in U.S. patent US7440095B2, by Deck et al.

Vignetting usually involves the problem that the center of the projected image of the area is bright-the integrity of the image is preserved-but the brightness decreases toward the edges of the image. Vignetting therefore leads to the problem that the spectrometric measurements from the specimen area are skewed, with the nonuniform illumination across the received image providing higher signal levels nearer the center of the image/area, and diminished signal levels near the edges of the image/area. As a result, the spectra from the specimen at the center of the area/image are more strongly represented in the area's spectroscopic measurements than the specimen nearer the edges of the image/area. More generally, vignetting leads to less-than-optimal signal strength owing to the loss in light near the edges of the image/area. Vignetting tends to arise as a side-effect from the use of "off-angle" arrangements of optical elements, e.g., from reflection or refraction of light at angles to the optical axis of the lenses and/or mirrors used for the microscope optics (at least those lenses/mirrors used to perform spectroscopic measurement functions). The off-axis angles tend to lead to greater vignetting, and thus greater reductions in image luminance and signal strength, because light is lost as it "leaks from the usable areas (the apertures/pupils) of successive optical elements.

Applicant recognizes that different light sources may be used in the spectroscopic microscope for different applications and use cases. When the light input is changed or modified, and the optics of the optical microscope remain the same, vignetting can occur. To reduce the effects of vignetting, the optics of the microscope need to be changed or modified to correspond to the light input from different light sources, which can be time consuming and requires a person knowledgeable with the alignment of the optical elements of the microscope.

The foregoing background discussion is intended solely to aid the reader. It is not intended to limit the innovations described herein. Thus, the foregoing discussion should not be taken to indicate that any particular element of a prior system is unsuitable for use with the innovations described herein, nor is it intended to indicate that any element is essential in implementing the innovations described herein.

US 2008/049304 A1 describes a spectrometric microscope in which input light is provided from a light source to a specimen via focusing and folding reflectors, and a source objective element, and the aperture of the light source is matched to the aperture of the source objective element to maximize light throughput to the specimen. The light from the specimen is collected at a collector objective element and delivered to a camera element, which in turn provides the light to a photosensitive detector. The apertures of the camera element and the collector objective element are also matched to maximize light throughput from the specimen to the detector.

US 6,515,750 B1 describes an interferometer system for testing and characterizing micro-optical components and having three aspects, namely: an automatic system for testing a plurality of micro-optical components in sequence, a special holding device for holding individual micro-optical components during testing, and a modified Linnik objective which is used with short coherent light and an opaque reference sphere to carry out reflection tests on micro-optical component having at least one curved surface.

US 2006/087728 A1 describes an optical system comprising an optical unit and a collimator, wherein the collimator is arranged preceding or following the optical unit in a beam path of the optical system, said optical unit imposing a predetermined longitudinal chromatic aberration on a beam supplied to said beam path and said beam impinging on the collimator as a diverging beam or a parallel beam and being converted by said collimator into a parallel beam or a converging beam, with the collimator comprising at least one lens as well as a curved mirror which folds the beam path such that the supplied beam passes twice through the lens.

### SUMMARY

The foregoing needs are met, to a great extent, by the microscope system described herein.

The present invention provides a microscope for examining a specimen as set out in claim 1 and a method for examining a specimen with a microscope as set out in claim 8.

This summary is provided to introduce a selection of concepts in a simplified form that are further described below in the Detailed Description section. This Summary is not intended to identify key features or essential features of the claimed subject matter, nor is it intended to be used to limit the scope of the claimed subject matter. Furthermore, the claimed subject matter is not constrained to limitations that solve any or all disadvantages noted in any part of this disclosure.

### BRIEF DESCRIPTION OF THE DRAWINGS

The foregoing summary, as well as the following detailed description of illustrative embodiments of the present application, will be better understood when read in conjunction with the appended drawings. For the purposes of illustrating the present application, there are shown in the drawings illustrative embodiments of the disclosure. It should be understood, however, that the application is not limited to the precise arrangements and instrumentalities shown. In the drawings:
FIG. 1 illustrates a schematic of a spectroscopic microscope system, according to an aspect of this disclosure.
FIG. 2 illustrates a schematic of a spectroscopic microscope system, according to another aspect of this disclosure.
FIG. 3 illustrates a top view of a portion of a spectroscopic microscope system, according to an aspect of this disclosure.
FIG. 4 illustrates a bottom perspective view of an optical assembly, according to aspects of this disclosure.
FIG. 5 illustrates a flowchart depicting a method for examining a specimen with a spectroscopic microscope system, according to an aspect of this disclosure.

### DETAILED DESCRIPTION

Certain terminology used in this description is for convenience only and is not limiting. The words "axial", "radial", "circumferential", "outward", "inward", "upper," and "lower" designate directions in the drawings to which reference is made. As used herein, the term "substantially" and derivatives thereof, and words of similar import, when used to describe a size, shape, orientation, distance, spatial relationship, or other parameter includes the stated size, shape, orientation, distance, spatial relationship, or other parameter, and can also include a range up to 10% more and up to 10% less than the stated parameter, including 5% more and 5% less, including 3% more and 3% less, including 1% more and 1% less. All ranges disclosed herein are inclusive of the recited endpoint and independently combinable (for example, the range of "from 2 grams to 10 grams" is inclusive of the endpoints, 2 grams and 10 grams, and all the intermediate values). The terminology includes the above-listed words, derivatives thereof and words of similar import.

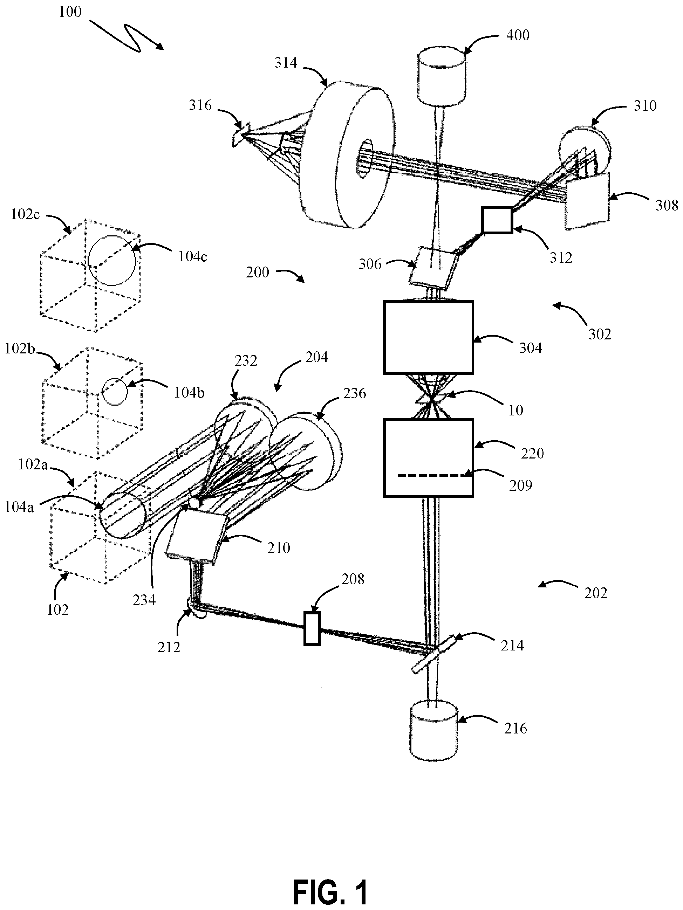

Systems and methods are provided for examining a specimen using a spectroscopic microscope, such as the spectroscopic microscope shown in FIGS. 1-2. The microscope may receive any one of multiple light sources for different applications or use cases. The light sources may generate light of one or more of different wavelength ranges, modulations, coherence lengths, and collimations. In one example, the light source may include an interferometer emitting modulated infrared (IR) light. Each of the light sources emits an output light through an output pupil. The diameters of the output pupils of different light sources may be different.

The microscope may include an optical microscope. The optical microscope includes a frame and a source objective fixbaly connected to the frame for directing light emitted from the light source towards a specimen held by a specimen stage. The source objective defines an imaging pupil that allows light passing through the source objective. The source objective may be a Schwarzschild objective. The light source is removably connected to the optical microscope by removably connecting to the frame of the optical microscope.

The optical microscope further comprising multiple optical assemblies. Each optical assembly includes a set of optical elements, wherein each of the set of optical elements is fixably positioned on a plate of the optical assembly. The set of optical elements are pre-aligned for the corresponding light source. The optical assembly can be removably connected to the frame of the optical microscope. Each light source has a corresponding optical assembly for conditioning the output light of the corresponding light source coupled to the optical microscope. In particular, the optical assembly critically images the output pupil of the corresponding light source to the imaging pupil of the source objective. The optical assembly adjusts the collimation and conjugation distance of light entering the source objective, so that the microscope can be used with multiple light sources by simply removablely connecting the light source and the optical assembly to the frame of the optical microscope. In one example, the plate of the optical assembly includes a pinned plate, and removably connecting the optical assembly to the frame of the microscope includes dropping the pinned plate into the optical microscope. The microscope may start imaging right after connecting the optical assembly with the frame, without further alignment of the optical elements by the user.

Herein, the term "fixably" means that the parts are attached to each other and cannot be moved relative to each other by the user during the normal operation of the spectroscopic microscope. The term "removabely" means that the user can remove one part from another during the normal operation of the spectroscopic microscope.

The optical elements within an optical assembly may include multiple reflectors, and at least one of the reflectors includes an off-axis aspherical surface. The off-axis aspherical surface may minimize the pupil image aberrations, and to better match the output pupil of the light source with the imaging pupil of the source objective. A better matched input pupil image also largely improves the illumination uniformity on the specimen. Further, there is no limiting input aperture positioned between output pupil of the light source and the source objective. As such, the through-put losses from the light source to the source objective may be reduced.

Each of the optical assembly includes a first reflector, a second reflector, and a third reflector fixably mounted on a plate. The output light of the light source sequentially reaches the first concave reflector, the convex reflector, and the second concave reflector. The first, second and third reflectors are pre-aligned specifically for the corresponding light source. The optical assembly may be removably mounted to the frame of the optical microscope by removably mounting the plate of the optical assembly to the frame.

In this way, the interchangeable pre-aligned input optics increases the flexibility of the microscope. It reduces the tolerance requirement and minimizes the dependency of the microscope beam path from the input bench alignment.

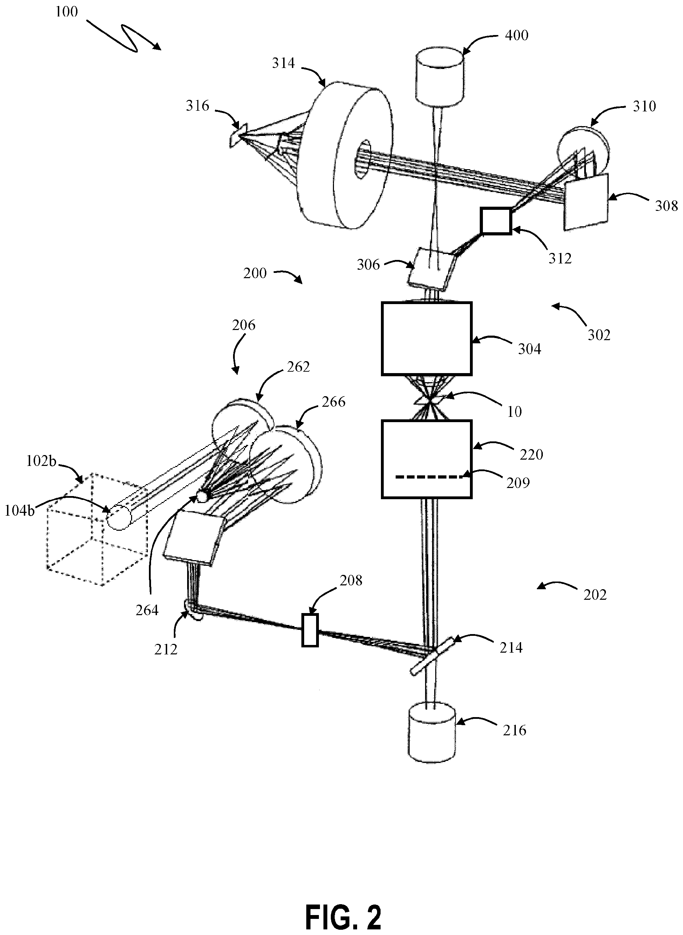

Turning to FIGS. 1 and 2, the figures illustrate schematics of a spectroscopic microscope 100, according to aspects of this disclosure. The spectroscopic microscope 100 is configured to analyze a specimen using illumination components for illuminating the specimen, collection components for collecting spectroscopic measurements from the illuminated specimen, and viewing components for viewing the illuminated specimen.

The spectroscopic microscope system 100 includes a plurality of light sources 102 and an optical microscope 200. Each of the plurality of light sources 102 can include, for example, an interferometer emitting modulated IR light so that the spectroscopic microscope system 100 can be operated as an infrared spectrometer. The IR light provided by the light sources 102 can include a distribution of wavelengths. In general, the light sources 102 can include a variety of sources known to those skilled in the art, including a heated infrared source chosen from any customized or conventional known source utilized in the field, such as, but not limited to, a wire, metal or ceramic element that is heated to emit a continuous band of optical radiation.

The light sources 102 can be interchangeable with the optical microscope 200 and provide a light to the optical microscope 200 to illuminate the specimen. As illustrated, the light sources 102 can include multiple light sources, such as a first light source 102a, a second light source 102b, and a third light source 102c. It will be appreciated that the microscope system 100 can include fewer or more light sources. Each of the light sources 102 has a respective output pupil 104 (e.g., the first light source 102a has a first pupil 104a, the second light source 102b has a second output pupil 104b, and the third light source 102a has a third output pupil 104c). Each output pupil 104a,b,c can be different than each of the other output pupils 104a,b,c. For example, each output pupil 104a,b,c can have a specific diameter, type of lens, or other specific configuration for outputting a light beam to the optical microscope 200. The light emitted from the light sources 102 through the apertures 104 is passed through the optical microscope 200 as further described below.

The optical microscope 200 includes an illumination side 202, a collection side 302, and a specimen stage 10 positioned optically between the illumination side 202 and the collection side 302. The illumination side 202 includes a first optical assembly 204, a second optical assembly 206, an additional focus 208, reflectors 210, 212, and 214, a visible light source 216, and a source objective220. The source objective 220 includes an imaging pupil 209 defined by the configuration of the source objective 220. In some examples, the imaging pupil 209 is a virtual aperture defined by the configuration of multiple optical elements within the source objective 220. It will be appreciated that the illumination side 202 can include fewer or more components, such as, reflectors, lenses, mirrors, additional interchangeable optical assemblies, or still other components, configured to pass light through the optical microscope 200.

The first and second optical assemblies 204 and 206 are interchangeably connected to the optical microscope 200. For example, depending on which light source 102 is providing light to the optical microscope 200, one of the first and second optical assemblies 204 and 206 can be selected to pass the light through the optical microscope 200. As further described below, the first optical assembly 204 is configured to pass light emitted from the first light source 102a, and the second optical assembly is configured to pass light emitted from the second light source 102b. If the first optical assembly 204 is connected to the optical microscope 200 and the light source is changed from the first light source 102a to the second light source 102b, the first optical assembly 204 can be removed from the optical microscope 200 and replaced with the second optical assembly 206. Similarly, if the second optical assembly 206 is connected to the microscope 200 and the light source is changed from the second light source 102b to the first light source 102a, the second optical assembly 206 can be removed from the optical microscope 200 and replaced with the first optical assembly 204. Each of the first and second optical assemblies 204 and 206 are configured to pass light or magnify light from the respective light sources 102a and 102b through the imaging pupil 209 of the source objective 220. In particular, each optical assembly images the output pupil of the corresponding source to the imaging pupil of the source objective optical element.

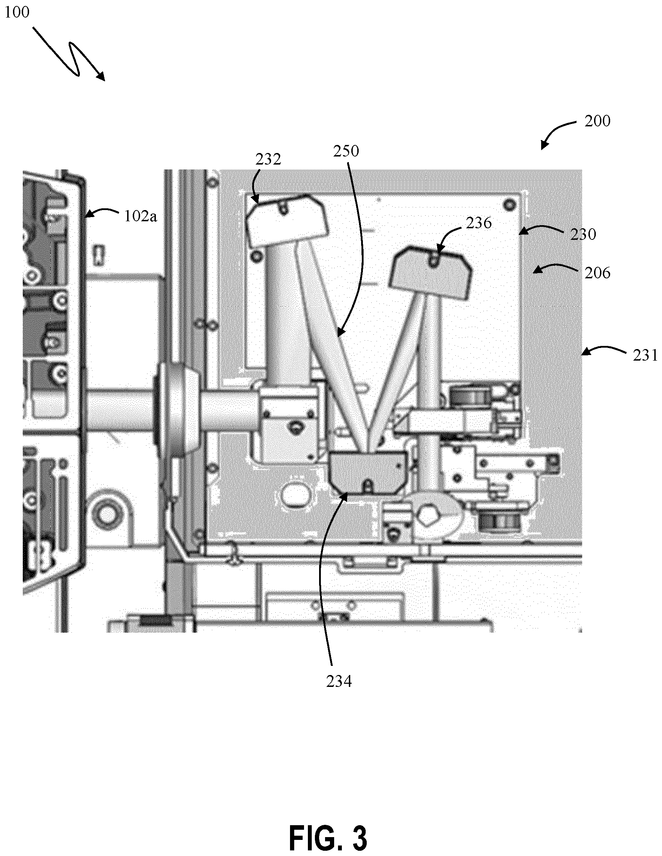

The first optical assembly 204 includes a first plate 230 (See FIG. 3), a first reflector 232, a second reflector 234, and a third reflector 236. Each of the first, second, and third reflectors 232, 234, and 236 are fixably mounted to the first plate 230. The first, second, and third reflectors 232, 234, and 236 can be fixed to the first plate by pins, screws, or other fixation elements. The first plate 230 is configured to removably mount the first optical assembly 204 to a frame 231 of the optical microscope 200. The first, second, and third reflectors 232, 234, and 236 are positioned on the first plate 230 at locations so as to optically align the light emitted from the first light source 102a with the imaging pupil 209. The locations of each of the first, second, and third reflectors 232, 234, and 236 are such that a standard light beam with a specific focal distance and collimation is output to the imaging pupil 209. In this arrangement, the first, second, and third reflectors 232, 234, and 236 can substantially align the first pupil 104a with the imaging pupil 209, which can limit the amount of light that is lost as the light passes through the optical microscope 200. In an aspect, the imaging pupil 209 is defined by the source objective 220 of the optical microscope 200. The imaging pupil may be considered a virtual aperture at a virtual plane within the source objective.

The first reflector 232 can comprise an off-axis aspherical reflector. In an aspect, the first reflector 232 can comprise a concave aspherical mirror. The first reflector 232 is positioned on the first plate 230 at a location to receive the light emitted from the first light source 102a, and reflect the light toward the second reflector 234.

The second reflector 234 can comprise a spherical reflector. In an aspect, the spherical second reflector 234 can have a convex shape. The second reflector 234 is positioned on the first plate 230 at a location to receive the reflected light from the first reflector 232, and reflect the light toward the third reflector 236.

The third reflector 236 can comprise an off-axis aspherical reflector. In an aspect, the third reflector 236 can comprise a concave aspherical mirror. The third reflector 236 is positioned on the first plate 230 at a location to receive the reflected light from the second reflector 234, and reflect the light to the imaging pupil 209 within the source objective 220. The first, second, and third reflectors 232, 234, and 236 are positioned on the first plate 230 to substantially align the first pupil 104a with the imaging pupil 209.

The first, second, and third reflectors 232, 234, and 236 can introduce some astigmatism and aberration. However, since the location and configuration of each of the first, second, and third reflectors 232, 234, and 236 on the first plate 230 specifically corresponds to the light emitted through the first pupil 104a of the first light source 102a, the aberrations are minimal, and therefore any resulting vignetting is minimal. In an aspect, angles between entrance and exit light beams through the first optical assembly 204 are less than about 30 degrees.

Referring to FIG. 2, the second optical assembly 206 includes a second plate (not shown), a first reflector 262, a second reflector 264, and a third reflector 266. Each of the first, second, and third reflectors 262, 264, and 266 are fixably mounted to the second plate. It will be appreciated that the second plate can be configured substantially similar to the first plate 230. The second plate is configured to removably mount the second optical assembly 206 to the frame 231 of the optical microscope 200. The first, second, and third reflectors 262, 264, and 266 are positioned on the second plate at locations so as to optically align the light emitted from the second light source 102b with the imaging pupil 209. The locations of each of the first, second, and third reflectors 262, 264, and 266 are such that a standard light beam with a specific focal distance and collimation is output to the imaging pupil 209. In this arrangement, the first, second, and third reflectors 262, 264, and 266 can substantially align the second pupil 104b with the imaging pupil 209, which can limit the amount of light that is lost as the light passes through the optical microscope 200.

The first reflector 262 can comprise an off-axis aspherical reflector. In an aspect, the first reflector 262 can comprise a concave aspherical mirror. The first reflector 262 is positioned on the second plate at a location to receive the light emitted from the second light source 102b, and reflect the light toward the second reflector 264.

The second reflector 264 can comprise a spherical reflector. In an aspect, the spherical second reflector 264 can have a convex shape. The second reflector 264 is positioned on the second plate at a location to receive the reflected light from the first reflector 262, and reflect the light toward the third reflector 266.

The third reflector 266 can comprise an off-axis aspherical reflector. In an aspect, the third reflector 266 can comprise a concave aspherical mirror. The third reflector 266 is positioned on the second plate at a location to receive the reflected light from the second reflector 264, and reflect the light to the imaging pupil 209. The first, second, and third reflectors 262, 264, and 266 are positioned on the second plate to substantially align the second pupil 104b with the imaging pupil 209.

Referring to FIGS. 1 and 2, the reflectors 210, 212, and 214 can comprise planar folding reflectors. In an aspect, the reflectors 210, 212, and 214 comprise plane mirrors. The reflectors 210, 212, and 214 transmit the light received from the first and second optical assemblies 204 and 206 through the imaging pupil 209 within the source objective 220. The reflectors 210, 212, and 214 are sized and positioned to capture substantially all incident light.

The optical microscope 200 further includes the visible light source 216 (e.g., a light source emitting in the visible spectrum) providing light to the specimen stage 10 and the specimen via the source objective 220. A viewing optical element 400 receiving the resulting light from the specimen via a collector objective element 304. The viewing optical element 402 can take the form of an eyepiece through which a user can view the specimen, and/or it could take the form of the input lens of a video camera, a detector, or other imaging/detection system. In the microscope system 100 illustrated in the figures, the folding reflector 214 and a folding reflector 306 are dichroic, and can be coated or otherwise treated to reflect the light utilized by the spectroscope (e.g., infrared light, quantum cascade laser (QCL), or other light sources) and to pass the light utilized by the viewing optical element 400. It will be appreciated that the folding reflectors 214 and 306 are effectively invisible to the visible light source 216 and viewing element 400.

The source objective 220 receives the light emitted from the light source 102 and the visible light emitted from the visible light source 216. The source objective 220 can include several reflectors (not shown) that forward the light received from the light source 102 and the visible light source 216 to the specimen stage 10.

The collection side 302 of the optical microscope 200 includes the collector objective element 304, planar folding reflectors 306 and 308, a focusing reflector 310, an aperture 312, a camera optical element 314, and a detector 316. It will be appreciated that the collection side 302 can include fewer or more components, such as, reflectors, lenses, mirrors, or still other components, configured to pass light through the optical microscope 200.

The collector objective optical element 304 is positioned to receive the light from the specimen stage 10. The collector objective element 304 can have a plurality of reflectors that include, for example, one or more concave mirrors and convex mirrors positioned to reflect the light through the collector objective optical element 304. The collector objective element 304 is configured to supply the light to intermediate collector optical elements, namely planar folding reflectors 306 and 308, and the focusing reflector 310. In an aspect, the collector objective element 304 transmits the light through the aperture 312. The camera optical element 314 is positioned to receive the light transmitted through the collector objective optical element 304. The camera optical element 314 can include a plurality of camera reflectors positioned to receive and transmit the light (and defining a camera limiting aperture) to an image plane along which the detector 316 is aligned. In an aspect, the detector 316 is a multi-element detector (e.g., a detector array). It will be appreciated that the detector 316 can be any suitable detector, such as an array of mercury-cadmium-telluride (MCT) photoconductive elements similar to that used in the Thermo Electron Continuum XL FT-IR microscope (Thermo Fisher Scientific Inc., Madison, Wis., USA).

The intermediate collector optical elements 306, 308, and 310 are positioned to adapt the light from the collector objective element 304 such that the light has a diameter at least substantially matching a diameter of the camera limiting aperture when the light is received thereon. The light loss can reduced on the collection side 302, with the efficient transmission of light from the light source 102 to the source objective 220 in the illumination side 202 being continued in the collection side 302 from the collector objective element 304 to the camera element 314. This can result in high light throughput to the specimen held by the specimen stage 10, and high light transmission from the specimen to the detector 316, which can reduce the effects of light loss from vignetting and allow the collection of higher-strength signals at the detector 316.

The optical elements on the first and second optical assemblies 204 and 206 are positioned and aligned with the respective first and second output pupils 104a and 104b such that the first and second output pupils 104a and 104b of the first and second light sources 102a and 102b are at least substantially critically imaged to the same imaging pupil 209 of the source objective 220 (and thus to the specimen at the specimen stage 10). For example, when the first plate 230 is connected to the frame 231, the optical alignment of the first pupil 104a with the imaging pupil 209 adapts the first output light to be at least critically imaged to the specimen. When the second plate is connected to the frame 231 the optical alignment of the second pupil 104b with the imaging pupil 209 adapts the second output light to be at least critically imaged to the specimen. The tolerance budget for the optics can be very tight. For example, the translation tolerances can be allowed for only up to 0.1 mm, and the angular tolerances can be less than 0.05 degrees. With the first and second optical assemblies 204 and 206, the tolerance budget can be up to a translation tolerance of 0.5 mm and an angular tolerance of less than 0.1 degrees, which can provide an IR precision of better than approximately 2.5% variation.

Similarly, the optical elements of the collection side 300 are positioned and aligned so that the specimen is at least substantially critically imaged to the detector 314 (i.e., so that a collector objective limiting aperture is at least substantially critically imaged to a camera limiting aperture). Such critical imaging can directly image a selected region of the light source 102 to a corresponding region on the specimen at the specimen stage 10 (e.g., a glowing filament within the light source 102), and can also directly image the specimen to the detector 316.

The collection side 302 can also include the aperture 312. In an aspect, the aperture 312 comprises an aperture array. The aperture array can include differently sized arrays. Different array sizes can be selected by a user to vary the sizes of the regions on the specimen on the stage 10 from which spectra are captured, and may thereby vary the spatial resolution of the microscope system 100.

The specimen stage 10 can take the form of any suitable specimen stage. In an aspect, the specimen stage 10 is motorized to allow translation in two dimensions about the focal plane, and also preferably rotation about the beam axes of the source objective 220 and/or the collector objective optical element 304.

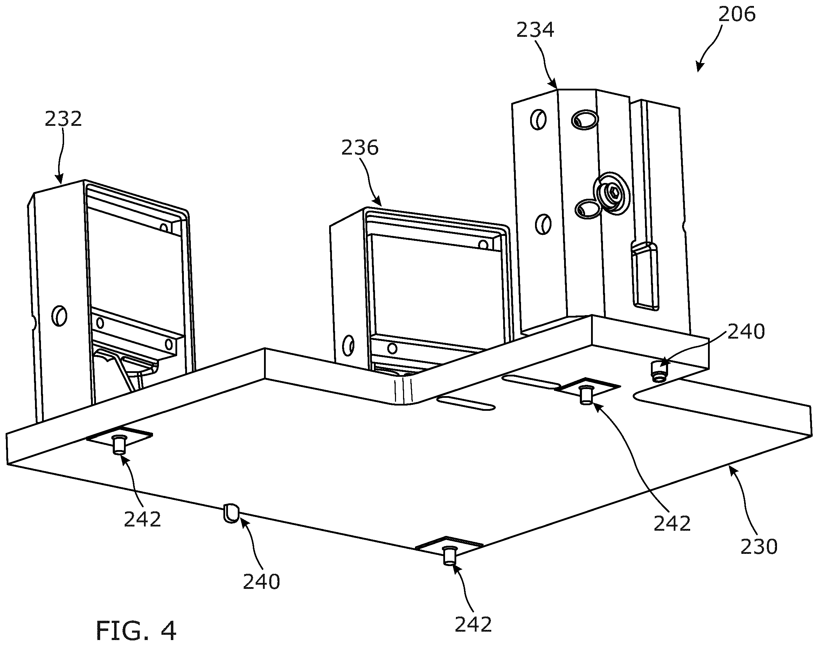

FIG. 3 illustrates a top view of a portion of the microscope system 100, and FIG. 4 illustrates a bottom perspective view of the first optical assembly 206, according to aspects of this disclosure. As illustrated, the first light source 102a is connected to the optical microscope 200. The optical microscope 200 includes the frame 231. The frame 231 can include, for example, a combination of plates, beams, walls, casings, or other structure for supporting and retaining the optical components on and/or within the optical microscope 200. In an aspect, several of the optical components are fixed to the frame 231. For example, the additional focus 208, the imaging pupil 209, the reflectors 210, 212, and 214, the visible light source 216, the source objective220, the collector objective element 304, the planar folding reflectors 306 and 308, the focusing reflector 310, the aperture 312, the camera optical element 314 can be fixed to the frame 231. It will be appreciated that components "fixed to" the frame 231 can be adjusted, rotated, or otherwise moved on the frame 231 but that removal of a fixed component from the frame 231 is substantially prevented due to, for example, the complexity of the connection, location of the connection, rigidity required of the connection, or still other reasons.

The first plate 230 and the second plate are removably connected to the frame 231. For example, the first plate 230 can be positioned on the frame 231 and temporarily secured to the frame 231 using pins, screws, or other removable fixation elements. When the light source 102 is changed (e.g. from the first light source 102a to the second light source 102b), the first plate 230 can be removed from the frame 231 and replaced with a different, such as the second, plate.

In an aspect, the first plate 230 and the second plate include alignment members positioned on each plate to align the plates with the frame 231. For example, as illustrated in FIG. 4, the first plate 230 includes alignment members 240. The alignment members 240 can be received within corresponding recesses, slots, holes, or other features (not shown) defined by the frame 231. In an aspect, first, second, and third reflectors 232, 234, and 236 can be fixed to the first plate by pins 242. The pins 242 can also facilitate alignment with the frame 231 when the first plate 230 is being positioned on the frame 231.

It will be appreciated that a wide variety of other components, layout distances, and general placements are possible, and thus the invention may assume a wide variety of forms other than the components shown in FIGS. 1-3. This includes the possibility of omitting or combining optical elements. For example, one or more of the folding reflectors 210, 212, 214, 306 and 308 can be omitted, which are merely included to provide a convenient layout, or adding optical elements, such as one or more additional folding reflectors or mirrors.

Further, while the microscope system 100 is shown as using a transmissive mode of operation (with spectra being generated from light transmitted through the specimen on the specimen stage 10), a reflective mode could be implemented as well (or instead), as by providing a light source at the location of the microscope viewing optical element 400, or by inserting a dichroic mirror somewhere along the beam path at the collection side 302 and providing light source input to this mirror.

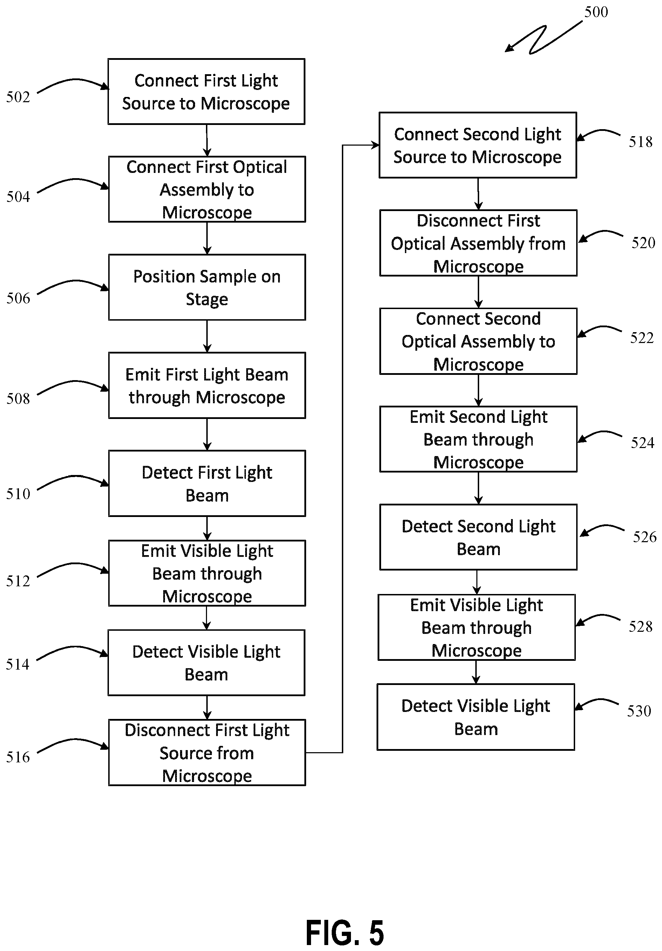

FIG. 5 illustrates a flowchart depicting a method 500 for examining a specimen on the specimen stage 10 with the microscope system 100, according to an aspect of this disclosure. At step 502, the first light source 102a is connected to the optical microscope 200. After the first light source 102a is connected to the optical microscope 200, the appropriate optical assembly can be selected that corresponds to the first light source 102a. For example, as described above, the first optical assembly 204 has reflectors 232, 234, and 236 positioned at locations on the first plate 230 to optically align the first pupil 104a of the first light source 102a with the imaging pupil 209. At step 504, the first optical assembly 204 is removably connected to the optical microscope 200. For example, the first plate 230, which includes each of the reflectors 232, 234, and 236 fixedly mounted thereon, can be removably connected to the frame 231 of the optical microscope 200. The alignment members 240 can be inserted into respective alignment features defined by the frame 231 to align the first optical assembly 204 with the frame 231.

At step 506, the specimen is placed on the specimen stage 10. In an aspect, the specimen is held by the specimen stage 10. After the specimen is placed on the stage 10, at step 508, a first light beam or output light 250 (See FIG. 3) can be emitted from the first light source 102a. In an aspect, the first light beam 250 is an IR light beam. The first light beam 250 is emitted through the first pupil 104a and is received by the first optical assembly 204 connected to the optical microscope 200. The reflectors 232, 234, and 236 of the first optical assembly 204 pass the first light beam 250 through the imaging pupil 209 within the source objective 220, the specimen on the specimen stage 10, and into the collection side 302.

At step 510, the detector 316 (e.g. IR detector or first detector) receives the first light beam 250 after the light passes through the specimen. The first light beam 250 is delivered to the detector 316 via the camera optical element 314, which receives the first light beam from the collector objective element 304 via the collector reflector elements 306, 310, and 312 and the aperture 312.

At step 512, a visible light can be emitted from the visible light source 216. The visible light can be transmitted to the specimen stage 10 through the folding reflector 214, the imaging pupil 209 within the source objective220, and to the collection side 302. At step 514, the viewing optical element 400 receives the visible light after the light passes through the specimen. It will be appreciated that that the optical microscope 200 can comprise a second detector (e.g. visible light detector) configured to detect the visible light that passed through the specimen.

After the analysis of the specimen on the specimen stage 10 is complete, at step 516, the first light source 102a can be disconnected from the optical microscope 200. Another analysis of the specimen can be performed using the second light source 102b. Alternatively, a new analysis regarding a different specimen placed on the specimen stage 10 can be performed with the second light source 102b. At step 518, the second light source 102b is connected to the optical microscope 200. At step 520, the first optical assembly 204 can be disconnected and removed from the optical microscope 200. The first optical assembly 204 can be disconnected and removed by removing any pins, screws, or other fixation components that temporarily secure the first plate 230 to the frame 231. After the first optical assembly 204 is removed, at step 522, the second optical assembly 206 is removably connected to the optical microscope 200. The second plate of the second optical assembly 206 can be connected to the frame 231 using pins, screws, or other fixation components. The second optical assembly 206 has reflectors 262, 264, and 266 fixedly positioned at locations on the second plate to optically align the second pupil 104b of the second light source 102b with the imaging pupil 209. In some examples, the sequence of steps 516-522 can be adjusted. For example, the second light source and second optical assembly can be connected to the optical microscope after removing the first light source and the first optical assembly from the optical microscope.

After the specimen is placed on the stage 10, at step 524, a second light beam or output light can be emitted from the second light source 102b. In an aspect, the second light beam is an IR light beam. The second light beam is emitted through the second pupil 104b and is received by the second optical assembly 206 connected to the optical microscope 200. The reflectors 262, 264, and 266 of the second optical assembly 206 pass the second light beam through the imaging pupil 209 within the source objective 220, the specimen on the specimen stage 10, and into the collection side 302.

At step 526, the detector 316 receives the second light beam after the light passes through the specimen. The second light beam is delivered to the detector 316 via the camera optical element 314, which receives the first light beam from the collector objective element 304 via the collector reflector elements 306, 310, and 312 and the aperture 312.

At step 528, the visible light can be emitted from the visible light source 216. The visible light can be transmitted to the specimen stage 10 through the folding reflector 214, the imaging pupil 209 within the source objective 220, and to the collection side 302. At step 530, the viewing optical element 400 receives the visible light after the light passes through the specimen.

It will be appreciated that each of the steps in method 500 are not required to be performed to examine the specimen. For example, the specimen on the stage 10 can be examined using a single light beam (e.g. the first light beam 250), without the visible light being emitted from the visible light source 216. Further, it will be appreciated that the steps in method 500 can be performed in different orders. For example, the visible light can be emitted prior to the first light beam 250, or the first optical assembly 204 can be removably connected to the optical microscope 200 prior to the first light source 102a being connected to the optical microscope 200. Method 500 can also be repeated, or at least steps of the method 500 can be performed, to connect additional light sources and corresponding additional optical assemblies. For example, a third light source 102c can be connected to the optical microscope 200 and a corresponding third optical assembly (not shown) can be connected to the optical microscope 200. The third optical assembly can include reflectors fixedly positioned at locations on a third plate to optically align the third output pupil 104c of the third light source 102c with the imaging pupil 209.

The interchangeable input optics (e.g. optical assemblies) are designed to image different light sources from, for example, a Fourier-transform infrared (FTIR) bench interferometer's pupil, to the input pupil (e.g. imaging pupil) of the optical microscope 200. The interchangeable input optics can interface FTIR benches from either left side or right side of the optical microscope 200. The interchangeable input optics can be mounted on a pinned individual base-plate, and the optics are aligned on a common fixture and capable of dropping into the optical microscope 200 without further alignment.

It will be appreciated that the foregoing description provides examples of the disclosed system and method. However, it is contemplated that other implementations of the disclosure may differ in detail from the foregoing examples. For example, any of the embodiments disclosed herein can incorporate features disclosed with respect to any of the other embodiments disclosed herein. All references to the disclosure or examples thereof are intended to reference the particular example being discussed at that point and are not intended to imply any limitation as to the scope of the disclosure more generally. All language of distinction and disparagement with respect to certain features is intended to indicate a lack of preference for those features, but not to exclude such from the scope of the disclosure entirely unless otherwise indicated.

As one of ordinary skill in the art will readily appreciate from that processes, machines, manufacture, composition of matter, means, methods, or steps, presently existing or later to be developed that perform substantially the same function or achieve substantially the same result as the corresponding embodiments described herein may be utilized according to the present disclosure.

## Claims

1. A microscope (100) for examining a specimen, the microscope configured to receive a first light source (102a) or a second light source (102b), the first light source (102a) being configured to emit a first output light through a first output pupil (104a) , and the second light source (102b) being configured to emit a second output light through a second output pupil (104b), the microscope comprising:
a frame (231);
a source objective (220) fixably connected to the frame (231);
a first optical assembly (204) comprising:
a first plate (230) configured to removably connect to the frame (231), and
a first set of optical elements (232, 234, 236) configured to pass the first output light to the source objective (220), wherein the first set of optical elements (232, 234, 236) are fixably positioned on the first plate (230) to optically align the first output pupil (104a) of the first light source (102a) with an imaging pupil (209) of the source objective (220); and
a second optical assembly (206) comprising:
a second plate configured to removably connect to the frame (231), and
a second set of optical elements (262, 264, 266) configured to pass the second output light to the source objective (220), wherein the second set of optical elements (262, 264, 266) are fixably positioned on the second plate to optically align the second output pupil (104b) of the second light source (102b) with the imaging pupil (209) of the source objective (220),
wherein at least one of the first light source (102a) and the second light source (102b) is configured to output a modulated light, and
at least one of the first and second set of optical elements (232, 234, 236; 262, 264, 266) includes a first concave reflector, a second concave reflector and a convex reflector, wherein the first concave reflector, the second concave reflector and the convex reflector are arranged such that the first output light or the second output light sequentially reaches the first concave reflector, the convex reflector, and the second concave reflector.

2. The microscope of claim 1, wherein light exiting the first optical assembly (204) and light exiting the second optical assembly (206) have a same conjugation distance and collimation.

3. The microscope of claims 1 or 2, wherein the first set of optical elements (232, 234, 236) and the second set of optical elements (262, 264, 266) include at least one reflector with an off-axis aspheric surface.

4. The microscope of any of claims 1-3, further comprising at least one reflector fixably connected to the frame (231) to pass light exiting from either the first optical assembly (204) or the second optical assembly (206) towards the source objective (220).

5. The microscope of any of claims 1-4, wherein the source objective (220) directs light towards a specimen.

6. The microscope of claim 5, further comprising a detector (316) fixably connected to the frame (231) for collecting light passed through the specimen.

7. The microscope of any of claims 1-6, wherein the first optical assembly (204), when connected to the frame (231), is configured to critically image the first output pupil (104a) of the first light source (102a) to the imaging pupil (209) of the source objective (220), and wherein the second optical assembly, (206) when connected to the frame (231), is configured to critically image the second output pupil (104b) of the second light source (102b) to the imaging pupil (209) of the source objective (220).

8. A method for examining a specimen with a microscope (100), the method comprising:
removably connecting a first light source (102a) to a frame (231) of the microscope;
removably connecting a first optical assembly (204) to the frame of the microscope by removably connecting a first plate (230) of the first optical assembly to the frame, wherein the first optical assembly (204) includes a first set of optical elements (232, 234, 236) fixably positioned on the first plate, and the first set of optical elements is pre-aligned to pass a first output light emitted from a first output pupil (104a) of the first light source (102a) to an imaging pupil (209) of a source objective (220) fixably positioned on the frame;
passing, by the first set of optical elements (232, 234, 236), the first output light through the source objective (220) towards a first specimen;
removing the first light source (102a) and the first optical assembly (204) from the frame (231) of the microscope;
removably connecting a second light source (102b) to the frame (231) of the microscope;
removably connecting a second optical assembly (206) to the frame of the microscope by removably connecting a second plate of the second optical assembly to the frame, wherein the second optical assembly (206) includes a second set of optical elements (262, 264, 266) fixably positioned on the second plate, and the second set of optical elements is pre-aligned to pass a second output light emitted from a second output pupil (104b) of the second light source (102b) to the imaging pupil (209) of the source objective (220); and
passing, by the second set of optical elements (262, 264, 266), the second output light through the source objective (220) towards a second specimen,
wherein at least one of the first light source (102a) and the second light source (102b) outputs a modulated light, and
wherein at least one of the first and second set of optical elements (232, 234, 236; 262, 264, 266) includes a first and a second concave reflector and a convex reflector, wherein the first output light or the second output light sequentially reaches the first concave reflector, the convex reflector, and the second concave reflector.

9. The method of claim 8, wherein when the first optical source (102a) and the first optical assembly (204) are removably connected to the frame (231), the first output pupil (104a) of the first light source (102a) is critically imaged to the imaging pupil (209) of the source objective (220); and when the second light source (102b) and the second optical assembly (206) are removably connected to the frame (231), the second output pupil (104b) of the second light source (102b) is critically imaged to the imaging pupil (209) of the source objective (220).

10. The method of any of claims 8 or 9, wherein the first output light emitted from the first output pupil (104a) of the first light source (102a) is not limited by an aperture before entering the imaging pupil (209) of the source objective (220).

## Patentansprüche

1. Mikroskop (100) zum Untersuchen einer Probe, wobei das Mikroskop konfiguriert ist, um eine erste Lichtquelle (102a) oder eine zweite Lichtquelle (102b) zu empfangen, wobei die erste Lichtquelle (102a) konfiguriert ist, um ein erstes Ausgangslicht durch eine erste Ausgangspupille (104a) auszusenden, und die zweite Lichtquelle (102b) konfiguriert ist, um ein zweites Ausgangslicht durch eine zweite Ausgangspupille (104b) auszusenden, wobei das Mikroskop umfasst:
einen Rahmen (231);
ein Quellenobjektiv (220), das fest mit dem Rahmen (231) verbunden ist;
eine erste optische Anordnung (204), umfassend:
eine erste Platte (230), die konfiguriert ist, um abnehmbar mit dem Rahmen (231) verbunden zu werden, und
einen ersten Satz optischer Elemente (232, 234, 236), der konfiguriert ist, um das erste Ausgangslicht zum Quellenobjektiv (220) weiterzuleiten, wobei der erste Satz optischer Elemente (232, 234, 236) fest auf der ersten Platte (230) positioniert ist, um die erste Ausgangspupille (104a) der ersten Lichtquelle (102a) optisch mit einer Abbildungspupille (209) des Quellenobjektivs (220) auszurichten; und
eine zweite optische Anordnung (206), umfassend:
eine zweite Platte, die konfiguriert ist, um abnehmbar mit dem Rahmen (231) verbunden zu werden, und
einen zweiten Satz optischer Elemente (262, 264, 266), der konfiguriert ist, um das zweite Ausgangslicht zum Quellenobjektiv (220) weiterzuleiten, wobei der zweite Satz optischer Elemente (262, 264, 266) fest auf der zweiten Platte positioniert ist, um die zweite Ausgangspupille (104b) der zweiten Lichtquelle (102b) optisch mit der Abbildungspupille (209) des Quellenobjektivs (220) auszurichten,
wobei mindestens eine der ersten Lichtquelle (102a) und der zweiten Lichtquelle (102b) konfiguriert ist, um ein moduliertes Licht auszugeben, und
mindestens einer des ersten und des zweiten Satzes optischer Elemente (232, 234, 236; 262, 264, 266) einen ersten konkaven Reflektor, einen zweiten konkaven Reflektor und einen konvexen Reflektor einschließt, wobei der erste konkave Reflektor, der zweite konkave Reflektor und der konvexe Reflektor so angeordnet sind, dass das erste Ausgangslicht oder das zweite Ausgangslicht nacheinander den ersten konkaven Reflektor, den konvexen Reflektor und den zweiten konkaven Reflektor erreicht.

2. Mikroskop nach Anspruch 1, wobei das aus der ersten optischen Anordnung (204) austretende Licht und das aus der zweiten optischen Anordnung (206) austretende Licht den gleichen Konjugationsabstand und die gleiche Kollimation aufweisen.

3. Mikroskop nach Anspruch 1 oder 2, wobei der erste Satz optischer Elemente (232, 234, 236) und der zweite Satz optischer Elemente (262, 264, 266) mindestens einen Reflektor mit einer außeraxialen asphärischen Oberfläche einschließen.

4. Mikroskop nach einem der Ansprüche 1 bis 3, das ferner mindestens einen Reflektor umfasst, der fest mit dem Rahmen (231) verbunden ist, um Licht, das entweder aus der ersten optischen Anordnung (204) oder der zweiten optischen Anordnung (206) austritt, in Richtung des Quellenobjektivs (220) zu leiten.

5. Mikroskop nach einem der Ansprüche 1 bis 4, wobei das Quellenobjektiv (220) Licht auf eine Probe richtet.

6. Mikroskop nach Anspruch 5, das ferner einen Detektor (316) umfasst, der fest mit dem Rahmen (231) verbunden ist, um das durch die Probe hindurchtretende Licht zu sammeln.

7. Mikroskop nach einem der Ansprüche 1 bis 6, wobei die erste optische Anordnung (204), wenn sie mit dem Rahmen (231) verbunden ist, konfiguriert ist, um die erste Ausgangspupille (104a) der ersten Lichtquelle (102a) präzise auf die Abbildungspupille (209) des Quellenobjektivs (220) abzubilden, und wobei die zweite optische Anordnung (206), wenn sie mit dem Rahmen (231) verbunden ist, konfiguriert ist, um die zweite Ausgangspupille (104b) der zweiten Lichtquelle (102b) präzise auf die Abbildungspupille (209) des Quellenobjektivs (220) abzubilden.

8. Verfahren zum Untersuchen einer Probe mit einem Mikroskop (100), das Verfahren umfassend:
abnehmbares Verbinden einer ersten Lichtquelle (102a) mit einem Rahmen (231) des Mikroskops;
abnehmbares Verbinden einer ersten optischen Anordnung (204) mit dem Rahmen des Mikroskops durch abnehmbares Verbinden einer ersten Platte (230) der ersten optischen Anordnung mit dem Rahmen, wobei die erste optische Anordnung (204) einen ersten Satz optischer Elemente (232, 234, 236) umfasst, die fest auf der ersten Platte positioniert sind, und der erste Satz optischer Elemente vorab ausgerichtet ist, um ein erstes Ausgangslicht, das von einer ersten Ausgangspupille (104a) der ersten Lichtquelle (102a) emittiert wird, zu einer Abbildungspupille (209) eines Quellenobjektivs (220) zu leiten, das fest auf dem Rahmen positioniert ist;
Leiten des ersten Ausgangslichts durch den ersten Satz optischer Elemente (232, 234, 236) durch das Quellenobjektiv (220) zu einer ersten Probe;
Entfernen der ersten Lichtquelle (102a) und der ersten optischen Anordnung (204) vom Rahmen (231) des Mikroskops;
abnehmbares Verbinden einer zweiten Lichtquelle (102b) mit dem Rahmen (231) des Mikroskops;
abnehmbares Verbinden einer zweiten optischen Anordnung (206) mit dem Rahmen des Mikroskops durch abnehmbares Verbinden einer zweiten Platte der zweiten optischen Anordnung mit dem Rahmen, wobei die zweite optische Anordnung (206) einen zweiten Satz optischer Elemente (262, 264, 266) einschließt, die fest auf der zweiten Platte positioniert sind, und der zweite Satz optischer Elemente vorab ausgerichtet ist, um ein zweites Ausgangslicht, das von einer zweiten Ausgangspupille (104b) der zweiten Lichtquelle (102b) emittiert wird, zur Abbildungspupille (209) des Quellenobjektivs (220) zu leiten; und
Leiten des zweiten Ausgangslichts durch den zweiten Satz optischer Elemente (262, 264, 266) durch das Quellenobjektiv (220) zu einer zweiten Probe,
wobei mindestens eine der ersten Lichtquelle (102a) und der zweiten Lichtquelle (102b) ein moduliertes Licht ausgibt, und
wobei mindestens einer des ersten und des zweiten Satzes optischer Elemente (232, 234, 236; 262, 264, 266) einen ersten und einen zweiten konkaven Reflektor und einen konvexen Reflektor einschließt, wobei das erste Ausgangslicht oder das zweite Ausgangslicht nacheinander den ersten konkaven Reflektor, den konvexen Reflektor und den zweiten konkaven Reflektor erreicht.

9. Verfahren nach Anspruch 8, wobei, wenn die erste optische Quelle (102a) und die erste optische Anordnung (204) abnehmbar mit dem Rahmen (231) verbunden sind, die erste Ausgangspupille (104a) der ersten Lichtquelle (102a) präzise auf die Abbildungspupille (209) des Quellenobjektivs (220) abgebildet wird; und wenn die zweite Lichtquelle (102b) und die zweite optische Anordnung (206) abnehmbar mit dem Rahmen (231) verbunden sind, die zweite Ausgangspupille (104b) der zweiten Lichtquelle (102b) präzise auf die Abbildungspupille (209) des Quellenobjektivs (220) abgebildet wird.

10. Verfahren nach einem der Ansprüche 8 oder 9, wobei das von der ersten Ausgangspupille (104a) der ersten Lichtquelle (102a) emittierte erste Ausgangslicht nicht durch eine Blende begrenzt wird, bevor es in die Abbildungspupille (209) des Quellenobjektivs (220) eintritt.

## Revendications

1. Microscope (100) permettant d'examiner un spécimen, le microscope étant configuré pour recevoir une première source de lumière (102a) ou une seconde source de lumière (102b), la première source de lumière (102a) étant configurée pour émettre une première lumière de sortie à travers une première pupille de sortie (104a), et la seconde source de lumière (102b) étant configurée pour émettre une seconde lumière de sortie à travers une seconde pupille de sortie (104b), le microscope comprenant :
un cadre (231) ;
un objectif source (220) relié de manière fixe au cadre (231) ;
un premier ensemble optique (204) comprenant :
une première plaque (230) conçue pour se lier de manière amovible au cadre (231), et
un premier ensemble d'éléments optiques (232, 234, 236) conçus pour faire passer la première lumière de sortie vers l'objectif source (220), dans lequel le premier ensemble d'éléments optiques (232, 234, 236) est positionné de manière fixe sur la première plaque (230) pour aligner optiquement la première pupille de sortie (104a) de la première source de lumière (102a) avec une pupille d'imagerie (209) de l'objectif source (220) ; et
un second ensemble optique (206) comprenant :
une seconde plaque conçue pour se lier de manière amovible au cadre (231), et
un second ensemble d'éléments optiques (262, 264, 266) conçus pour faire passer la seconde lumière de sortie vers l'objectif source (220), dans lequel le second ensemble d'éléments optiques (262, 264, 266) est positionné de manière fixe sur la seconde plaque pour aligner optiquement la seconde pupille de sortie (104b) de la seconde source de lumière (102b) avec la pupille d'imagerie (209) de l'objectif source (220),
dans lequel au moins l'une de la première source de lumière (102a) et de la seconde source de lumière (102b) est configurée pour émettre une lumière modulée, et
au moins l'un du premier et du second ensemble d'éléments optiques (232, 234, 236 ; 262, 264, 266) comporte un premier réflecteur concave, un second réflecteur concave et un réflecteur convexe, dans lequel le premier réflecteur concave, le second réflecteur concave et le réflecteur convexe sont agencés de telle sorte que la première lumière de sortie ou la seconde lumière de sortie atteint séquentiellement le premier réflecteur concave, le réflecteur convexe, et le second réflecteur concave.

2. Microscope selon la revendication 1, dans lequel la lumière sortant du premier ensemble optique (204) et la lumière sortant du second ensemble optique (206) ont une même distance de conjugaison et une même collimation.

3. Microscope selon les revendications 1 ou 2, dans lequel le premier ensemble d'éléments optiques (232, 234, 236) et le second ensemble d'éléments optiques (262, 264, 266) comportent au moins un réflecteur avec une surface asphérique hors axe.

4. Microscope selon l'une quelconque des revendications 1 à 3, comprenant en outre au moins un réflecteur relié de manière fixe au cadre (231) pour faire passer la lumière sortant soit du premier ensemble optique (204) soit du second ensemble optique (206) vers l'objectif source (220).

5. Microscope selon l'une quelconque des revendications 1 à 4, dans lequel l'objectif source (220) dirige la lumière vers un spécimen.

6. Microscope selon la revendication 5, comprenant en outre un détecteur (316) relié de manière fixe au cadre (231) permettant de collecter la lumière ayant traversé l'échantillon.

7. Microscope selon l'une quelconque des revendications 1 à 6, dans lequel le premier ensemble optique (204), lorsqu'il est
relié au cadre (231), est conçu pour produire une image critique de la première pupille de sortie (104a) de la première source de lumière (102a) vers la pupille d'imagerie (209) de l'objectif source (220), et dans lequel le second ensemble optique (206), lorsqu'il est relié au cadre (231), est conçu pour produire une image critique de la seconde pupille de sortie (104b) de la seconde source de lumière (102b) vers la pupille d'imagerie (209) de l'objectif source (220).

8. Procédé permettant d'examiner un spécimen avec un microscope (100), le procédé comprenant :
la liaison amovible d'une première source de lumière (102a) à un cadre (231) du microscope ;
la liaison amovible d'un premier ensemble optique (204) au cadre du microscope en reliant de manière amovible une première plaque (230) du premier ensemble optique au cadre, dans lequel le premier ensemble optique (204) comporte un premier ensemble d'éléments optiques (232, 234, 236) positionnés de manière fixe sur la première plaque, et le premier ensemble d'éléments optiques est pré-aligné pour faire passer une première lumière de sortie émise à partir d'une première pupille de sortie (104a) de la première source de lumière (102a) vers une pupille d'imagerie (209) d'un objectif source (220) positionné de manière fixe sur le cadre ;
le passage, par le premier ensemble d'éléments optiques (232, 234, 236), de la première lumière de sortie à travers l'objectif source (220) vers un premier spécimen ;
le retrait de la première source de lumière (102a) et du premier ensemble optique (204) du cadre (231) du microscope ;
la liaison amovible d'une seconde source de lumière (102b) au cadre (231) du microscope ;
la liaison amovible d'un second ensemble optique (206) au cadre du microscope en reliant de manière amovible une seconde plaque du second ensemble optique au cadre, dans lequel le second ensemble optique (206) comporte un second ensemble d'éléments optiques (262, 264, 266) positionnés de manière fixe sur la seconde plaque, et le second ensemble d'éléments optiques est pré-aligné pour faire passer une seconde lumière de sortie émise à partir d'une seconde pupille de sortie (104b) de la seconde source de lumière (102b) vers la pupille d'imagerie (209) de l'objectif source (220) ; et
le passage, par le second ensemble d'éléments optiques (262, 264, 266), de la seconde lumière de sortie à travers l'objectif source (220) vers un second spécimen,
dans lequel au moins l'une de la première source de lumière (102a) et de la seconde source de lumière (102b) émet une lumière modulée, et
dans lequel au moins l'un du premier et du second ensemble d'éléments optiques (232, 234, 236 ; 262, 264, 266) comporte un premier réflecteur concave et un second réflecteur concave et un réflecteur convexe, dans lequel la première lumière de sortie ou la seconde lumière de sortie atteint séquentiellement le premier réflecteur concave, le réflecteur convexe, et le second réflecteur concave.

9. Procédé selon la revendication 8, dans lequel, lorsque la première source optique (102a) et le premier ensemble optique (204) sont reliés de manière amovible au cadre (231), une image critique de la première pupille de sortie (104a) de la première source de lumière (102a) est produite vers la pupille d'imagerie (209) de l'objectif source (220) ; et lorsque la seconde source de lumière (102b) et le second ensemble optique (206) sont reliés de manière amovible au cadre (231), une image critique de la seconde pupille de sortie (104b) de la seconde source de lumière (102b) est produite vers la pupille d'imagerie (209) de l'objectif source (220).

10. Procédé selon l'une quelconque des revendications 8 ou 9, dans lequel la première lumière de sortie émise par la première pupille de sortie (104a) de la première source de lumière (102a) n'est pas limitée par une ouverture avant d'entrer dans la pupille d'imagerie (209) de l'objectif source (220).
